# EUROPEAN PATENT SPECIFICATION

(11) **EP 0 976 345 B1**
(45) Date of publication and mention of the grant of the patent: **12.06.2002**
(21) Application number: 99203320.9
(22) Date of filing: 18.12.1996
(51) Int. Cl.: A46B 7/06, A46B 9/04

(54) **Contouring toothbrush head**
Zahnbürste mit federnden Kopfteil
Tête de brosse à dents conformable

(30) Priority: 29.12.1995 US 8734 P
(43) Date of publication of application: 02.02.2000
(62) Divisional of application: 96944453.8
(73) Proprietor: Colgate-Palmolive Company, New York, N.Y. 10022 (US)
(72) Inventor: Hohlbein, Douglas, West Trenton, NJ 08628 (US)
(74) Representative: Ottevangers, Sietse Ulbe

(56) References cited:
- EP-A- 0 336 641
- WO-A-92/17093
- WO-A-96/02165
- DE-A- 1 657 299
- DE-C- 3 840 136
- DE-U- 9 402 125
- FR-A- 1 247 433
- FR-A- 2 652 245
- GB-A- 189 335
- GB-A- 412 414
- GB-A- 647 924
- US-A- 2 685 703
- US-A- 3 188 672
- US-A- 5 373 602
- US-A- 5 393 796

## Description

This invention relates to a toothbrush and more particularly to a toothbrush head construction wherein the head is designed and configured to yield a brushing surface conforming to curved sections of teeth and which is bendable to conform to straight teeth sections.

Prior toothbrush constructions include toothbrush heads having pivoted or articulated sections joined together in a variety of constructions, such as a resilient strip of metal or the like, and also include pivoted or hinged articulated sections to provide a curved bristle configuration.

A curved/angled bristle surface configuration offers improved access to hard-to-reach areas such as the lingual surfaces of the front teeth, and behind the rear molars, placing more bristles in contact with the outer surfaces of the front teeth.

Many current brushes which have rigidly mounted bristles and a rigid curved/angled bristle surface exhibit an inherent disadvantage when brushing both flat as well as concave tooth surfaces. Placing a curved/angled bristle surface on flat tooth surfaces results in fewer bristles making contact with the teeth. These fewer bristles must support the brushing forces applied through the handle, which will result in premature splaying of the bristles. Some current toothbrushes have a "power tip" configuration (elongated rigidly mounted tip bristles) which are claimed to have improved access benefits.

WO-A-92/17093 discloses a toothbrush having a handle and an articulated head, said head having two sections to thereby define a composite head having an upper surface and a lower surface, said two sections having respective longitudinal spaced ends facing each other. Each of these sections have a plurality of tufts of bristles extending from a bottom surface thereof. An elastomer section is located between said spaced ends. During brushing the head sections will move relative to each other, thereby deforming the elastomer section resiliently.

The sections of this known toothbrush extend in their normal position coaxial to the handle and to each other, providing for a flat brushing surface. Only when pressure is applied, during brushing, to one or both of the brushing sections, the brushing surface is deformed, forcing the brushing sections to enclose an angle relative to each other and to the handle, in order to accommodate to the surface of the teeth. When said pressure is relieved the head sections will return to their normal, unstressed, aligned position and said brushing surface will be flat again.

In not prepublished WO 97/07707 toothbrushes are described having a head consisting of two segments, elastomeric material being positioned between said head sections. In the priority application of WO 97/07707, GB 9517450.4 all embodiments show, in non-stressed positions the two head segments being aligned with each other. Therefore, these show no angle between the head sections. WO 97/07707 is therefore a prior right according to Article 54(3) EPC for these embodiments only, not for embodiments normally having an angle between the head sections.

### SUMMARY OF THE INVENTION

According to the invention, an articulated toothbrush head is defined by two head sections which may be joined by one or more thin bridges of the same resin from which the toothbrush is formed, as by molding, to produce an integral construction. These thin bridges permit limited flexing between the two head sections, the two sections normally being at a small angle with respect to each other. That portion of the head between the two head sections may be, in one embodiment, in the general form of a T shaped slot running transversely of the top surface of the head, from one side head side edge to another. The slot is filled, as by injection, with an elastomer to control and enhance flexing. The construction is such that the head section most remote from the handle is normally tilted with respect to the head section nearest the handle, the latter head section located at one end of the handle. In a second embodiment, the head section may assume the form of a narrow cylindrical portion, or in a third embodiment two thin bridges may be employed, both having elastomer.

An advantage of the present flexible configuration is, in addition to the above noted features of a curved configuration, its inherent gentleness on the gums. When one brushes along the gumline with a power tip configuration, one focuses much of the force through the concentrated area at the raised tip. With the present configuration, this force is more evenly distributed.

There are considerable manufacturing efficiences with having the elastomer material of this invention used in the flex area being the same elastic material as that which may be used as a grip material in the handle area. Therefore, a configuration which allows flexing under the loads typically encountered during brushing with materials which are suitable for use as a grip would be desirable.

To achieve the flexibility described above, the cross section of elastomer may be convoluted, with one or more convolutes. To aid in fixing the elastomer to the toothbrush head sections, the elastomer may be configured to fit into one or more slots at both ends of the flexing area.

To minimize the gap between bristle tufts when the head is flexed into a flat configuration, it is desirable to position the plastic (resin) bridge between the tip and handle portions as near the bristle tips as possible. This bridge is straightened during flexing, and directly controls the gap between bristle tufts on each side of the flex area.

### BRIEF DESCRIPTION OF THE DRAWINGS

Figure 1 is a side elevational view illustrating the toothbrush head of this invention according to a first embodiment.
Figure 2 is a top plan view of the toothbrush head shown at Figure 1.
Figure 3 is an elevational view showing the head and tufts of bristles as brushing the inside surfaces of the lower teeth.
Figure 4 is a view similar to Figure 1 and shows a second embodiment.
Figure 5 is a view similar to Figure 1 and shows a third embodiment.

### DETAILED DESCRIPTION OF THE INVENTION

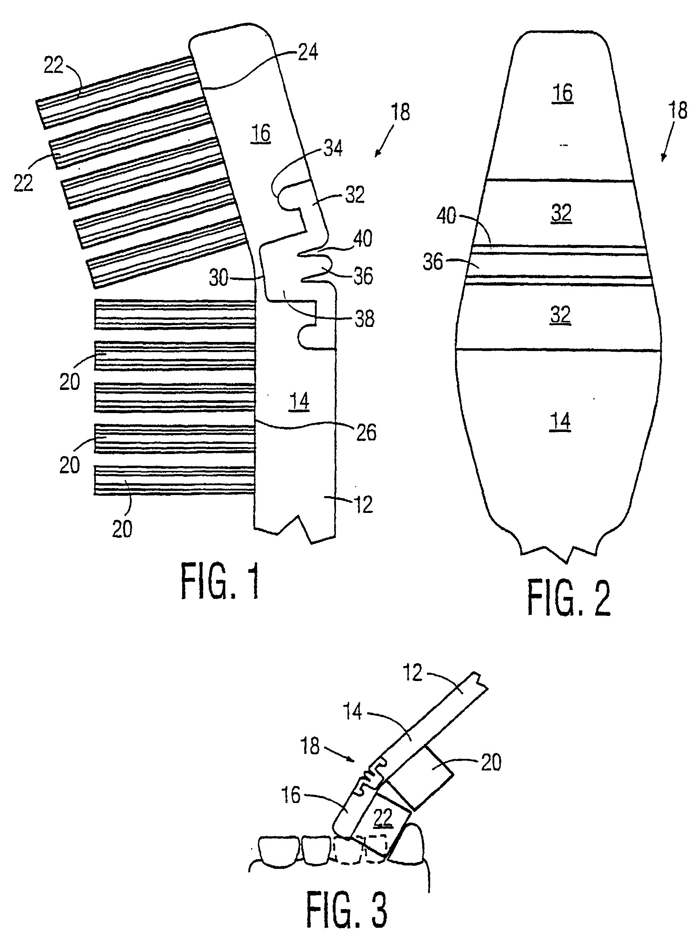

Referring now to Figure 1, a side elevational view of a toothbrush embodying the features and construction of this invention is shown in a vertical position, with a portion of the handle designated as 12. While not completely shown, the reader will understand that the handle extends downwardly and has a longitudinal axis. That portion of the head nearest the handle is designated as section 14 and is collinear with the handle, while that portion of the head most remote from the handle is designated as section 16. An elastomer section or joint between facing ends of sections 14 and 16 is denoted generally as 18. A plurality of tufts of bristles 20 extends at right angles to section 14, while a similar plurality of tufts of bristles 22 extends at right angles from section 16. Tufts of bristles 22 are thus at right angles to lower surface 24 of head section 16, while tufts of bristles 20 are perpendicular to lower or bottom surface 26 of head section 14.

A generally T-shaped groove, in longitudinal cross section, extends transversely across the upper or top surface of the head and is thus located between sections 14 and 16. The bottom of the central or main part of the groove is spaced from the lower surface of the composite head, leaving a thickness or bridge section designated as 30 which joins the lower portions of the two head sections. Bridge or zone 30 is typically of a thickness between 20 and 40 thousandths of an inch. The handle and head sections are molded from a plastic or resin such as polypropylene. The generally T shaped groove is filled with a resilient and soft thermoplastic elastomer. The T groove has two symmetrical wing portions 32, each terminating in an enlarged portion 34, the latter extending towards respective groups of tufts or bristles. The middle of the T shaped resin insert section 18 includes an integral ridge 36, while the lower portion or base portion of the T section is designated as 38. The thermoplastic elastomer which forms section 18 may be a thermoplastic vulcanate (TPV) consisting of a mixture of polypropylene and EPDM (ethylene propylene diene monomers) which is available as Santoprene (brand), described in US patent 5,393,796 issued to Halberstadt et al, or Vyram (brand), another TPV consisting of a mixture of polypropylene and natural rubber, both Santoprene and Vyram (brands) being elastomers marketed by Advanced Elastomer Systems. Other suitable elastomers include Kraton, a brand of styrene block copolymer (SBC) marketed by Shell, and Dynaflex G 2706 (brand), a thermoplastic elastomer marketed by GLS Corporation and which is made with Kraton (brand) polymer. These and other suitable elastomers have, typically, a Shore A hardness of from about 13 to 94, with about 29 being a preferred hardness. Grooves 40, on the top surface of the composite head, extend on both sides of raised rib or ridge 36, and border sections 32. Figure 2 further illustrates the construction. It is seen that elastomer section 18 spans the width of the head sections.

In the normal configuration of the head, it is seen that head section 16 is tilted with respect to head section 14 at an angle, typically about 18° (which is equivalent to approximately 162°). Thus, a force exerted on the brush during brushing is required to tilt section 16 if it is to be more nearly or completely aligned with section 14. The two head sections may be molded in their angled configuration as shown at Figure 1, with the elastomer then added. Alternatively, the two head sections may be molded aligned with each other and then angled upon locating or injecting the elastomer between them.

Referring now to Figure 3, it is seen that the effective curvature of the two head sections 14 and 16 offers improved access to inner and rear surfaces of the teeth. Thus, handle 12 need not be inclined as much as otherwise in order for forward section 16 and its bristles 22 to engage interior surfaces of the lower front teeth. In brushing a straight section of teeth, the deformability of the elastomer section 18 permits section 16 to partially or completely align itself with handle 12 and section 14.

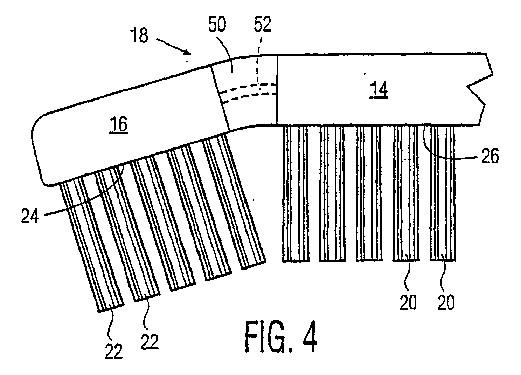

Figure 4 illustrates a second embodiment of the invention, there shown as horizontally disposed, and similar to that of Figures 1 and 2 except for a different construction for angularly joining the two head sections. The elastomer joint is again denoted as 18, with the elastomer itself denoted as 50 and being of the same composition as previously set out, and extends across the width of the head, and is located between the facing ends of sections 14 and 16. A thin integral bridge connection centrally between the two sections is designated as 52, typically being of cylindrical form in transverse cross section. Each end is integral with a respective head section. The elastomer is seen as completely surrounding bridge 52. This bridge connection may be, in transverse cross section, of any desired form. A top plan view of the head would be similar to Figure 2, except for the absence of grooves 40 and rib 36. As seen at Figure 4, the extent of the elastomer along the toothbrush longitudinal axis is shorter than that of Figures 1 and 2. Integral connection or bridge 52 performs the same function as bridge 30 of Figure 1, namely, integrally joining the two head sections.

The second and third embodiments yield the same cleaning action as shown at Figure 3. The thickness of bridges 52 is the same as that of bridge 30 of Figure 1.

It is seen that the bridges 30, 52 of the respective embodiments inhibit longitudinal separation of the two head sections by resisting tensile or other forces which might result in such separation, while the elastomer also controls the degree of flexing when head section 16 is subject to brushing forces. The function of the bridges is thus to tether the two head sections together, as well as to set them at an initial angle. When the sections move toward straightening or alignment, each elastomer section is deformed. Such deformation is resisted by the elastomer and to a lesser extent by the resin (polypropylene) bridges so that the sections revert to their normal, angled relationship upon the cessation of brushing force on forwardmost section 16.

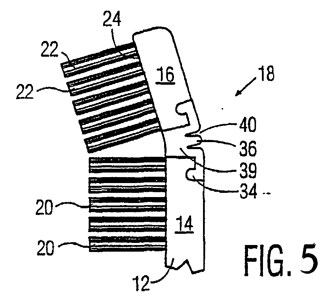

Figure 5 illustrates a third embodiment which differs from that shown in Figure 1 only in the absence of bridge 30 of Figure 1. Instead of bridge 30, the two head sections are coupled by T shaped elastomer section 39, the latter being of the same form as that of section 38 of Figure 1, except that it extends all the way to the lower surface of the head.

Many toothbrushes available in the marketplace today are "dual component", by which is meant that an elastomeric material is used to a greater or lesser extent, particularly in the finger gripping portion of the brush. The method of manufacture of such dual component brushes by injection molding is thus exceedingly well known in the art today. The toothbrushes according to the present invention may be made by use of such conventional dual component technology. For example, in accordance with a first method of manufacturing brushes according to the present invention, the elastomeric material may be introduced into the head area from the handgrip area via a molded-in channel (assuming a handgrip area is required). Alternatively, the elastomer could be introduced into the head area via a second injection point or gate located at the head, thereby eliminating the need for a molded-in channel. The head may then be tufted using conventional staple technology.

In accordance with a second method of manufacturing brushes according to the present invention, the handle and elastomer for the grip and the head areas are molded using a three-shot molding technique. The elastomer is introduced into the head area separately from the handgrip area. This process is especially useful if the elastomer for the head section of the brush and the hand grip section are different elastomeric materials, such as elastomers having two different Shore hardness values. For example, in some circumstances, it may be desired to use a softer elastomer for the head area than for the handgrip portion of the brush. As above, the head may then be tufted using conventional staple technology.

## Claims

1. A toothbrush having a handle (12) and an articulated head, said head having two sections (14, 16) to thereby define a composite head having an upper surface (23) and a lower surface (24, 26), said two sections (14, 16) having respective longitudinally spaced ends facing each other, each said head section (14, 16) having a plurality of tufts of bristles (20, 22) extending orthogonally from a bottom surface (24, 26) thereof, an elastomer section (18) located between and joining said spaced ends, **characterized in that** the toothbrush has two sections (14, 16) only,one of said head sections (14) being collincar with said handle (12), whereby said two head sections (14, 16) are normally at an angle relative to each other and said elastomer section (18) is deformed during brushing whenever said two head sections (14, 16) bend relative to each other towards alignment with each other.

2. A toothbrush according to claim 1, wherein said one head section (14) collinear with said handle (12) is an integral extension of said handle (12).

3. The toothbrush of claim 1 or 2, wherein said elastomer section (18) is generally T shaped in longitudinal cross section and has two parallel grooves (40) on said upper surface (23).

4. The toothbrush of claim 3 including an integral ridge (36) between said parallel grooves (40), said ridge (36) having an uppermost surface extending to said composite head upper surface (23).

5. A toothbrush according to any one of claims 1-4 wherein said elastomer section (18) is generally C shaped in longitudinal cross section.

6. A toothbrush according to claim 3 wherein said elastomer section (18) is generally T shaped in longitudinal cross section, said elastomer section (18) extending from said upper (23) to said lower surface (24, 26) at a central portion of said elastomer section (18).

7. A toothbrush according to anyone of claims 1-6, wherein the two sections (14, 16) are joined by a thin bridge (30; 52) being spaced apart from the upper surface of the sections (14, 16).

8. A toothbrush according to claim 7, wherein said thin bridge (52) is surrounded by elastomer material (50).

9. Method for producing a toothbrush according to any one of claims 1-8, in which the handle (12) and head are molded with the two head sections (14, 16) being aligned with each other, after which the two head sections (14, 16) are angled relative to each other upon locating or injecting said elastomer (18) between them.

## Patentansprüche

1. Zahnbürste mit einem Griff (12) und einem gegliederten Kopf, wobei der Kopf zwei Abschnitte (14, 16) hat, um dadurch einen zusammengesetzten Kopf mit einer oberen Oberfläche (23) und einer unteren Oberfläche (24, 26) zu definieren, wobei die beiden Abschnitte (14, 16) jeweilige längs beabstandete Enden haben, die sich einander gegenüberliegen, wobei jeder Kopfabschnitt (14, 16) eine Anzahl von Büscheln von Borsten (20, 22) hat, die sich orthogonal von einer unteren Oberfläche (24, 26) davon erstrecken, wobei sich ein Elastomerabschnitt (18) zwischen den beabstandeten Enden befindet und diese verbindet, **dadurch gekennzeichnet, dass** die Zahnbürste nur zwei Abschnitte (14, 16) hat, wobei einer der Kopfabschnitte (14) kollinear mit dem Griff (12) ist, wodurch die beiden Kopfabschnitte (14, 16) normalerweise unter einem Winkel zueinander stehen und der Elastomerabschnitt (18) während des Bürstens immer deformiert wird, wenn sich die beiden Kopfabschnitte (14, 16) relativ zueinander auf eine Ausrichtung zueinander biegen.

2. Zahnbürste nach Anspruch 1, wobei der eine Kopfabschnitt (14), der kollinear mit dem Griff (12) ist, eine integrale Verlängerung des Griffes (12) ist.

3. Zahnbürste nach Anspruch 1 oder 2, wobei der Elastomerabschnitt (18) allgemein in longitudinalem Querschnitt T-förmig ist und zwei parallele Rillen (40) an der oberen Oberfläche (23) hat.

4. Zahnbürste nach Anspruch 3, die einen integralen Vorsprung (36) zwischen den parallelen Rillen (40) aufweist, wobei der Vorsprung (36) eine oberste Oberfläche hat, die sich zu der oberen Oberfläche (23) des zusammengesetzten Kopfes erstreckt.

5. Zahnbürste nach einem der Ansprüche 1 bis 4, wobei der Elastomerabschnitt (18) in longitudinalem Querschnitt allgemein C-förmig ist.

6. Zahnbürste nach Anspruch 3, wobei der Elastomerabschnitt (18) in longitudinalem Querschnitt allgemein T-förmig ist, wobei sich der Elastomerabschnitt (18) in einem zentralen Bereich des Elastomerabschnitts (18) von der oberen (23) zu der unteren Oberfläche (24, 26) erstreckt.

7. Zahnbürste nach einem der Ansprüche 1 bis 6, wobei die beiden Abschnitte (14, 16) durch eine dünne Brücke (30; 52) verbunden sind, die von der oberen Oberfläche der Abschnitte (14, 16) beabstandet ist.

8. Zahnbürste nach Anspruch 7, wobei die dünne Brücke (52) von Elastomermaterial (50) umgeben ist.

9. Verfahren zum Herstellen einer Zahnbürste nach einem der Ansprüche 1 bis 8, bei dem der Griff (12) und der Kopf geformt werden, wobei die beiden Kopfabschnitte (14, 16) zueinander ausgerichtet sind, wonach die beiden Kopfabschnitte (14, 16) relativ zueinander beim Einbringen oder Einspritzen des Elastomers (18) zwischen sie abgewinkelt werden.

## Revendications

1. Brosse à dents comportant une poignée (12) et une tête articulée, ladite tête comportant deux sections (14, 16) de façon à définir une tête composite qui présente une surface supérieure (23) et une surface inférieure (24, 26), lesdites deux sections (14, 16) présentant des extrémités respectives espacées longitudinalement disposées l'une en face de l'autre, chacune desdites sections de tête (14, 16) comportant une pluralité de faisceaux de poils (20, 22) s'étendant orthogonalement à partir d'une surface de fond (24, 26) de ladite section de tête, une section en matériau élastomère (18) étant interposée entre lesdites extrémités espacées et les reliant entre elles, **caracterisé en ce que** la brosse à dents ne comporte que deux sections (14, 16), une desdites sections étant colinéair avec ladite poignée (12), lesdites deux sections de tête définissant normalement entre elles un angle relatif et ladite section en matériau élastomère étant déformée durant une opération de brossage chaque fois que lesdites deux sections de tête sont pliées l'une par rapport à l'autre pour tendre vers une position d'alignement relatif.

2. Brosse à dents suivant la revendication 1, dans laquelle ladite une section de tête (14) colinéair avec ladite poignée (12) est une extension intégrale de ladite poignée (12).

3. Brosse à dents suivant l'une quelconque des revendications 1 ou 2, dans laquelle ladite section en matériau élastomère (18) est de forme générale en T suivant une section longitudinale et présente deux gorges parallèles (4) sur ladite surface supérieure (23).

4. Brosse à dents suivant la revendication 3, comprenant une nervure (36) formée d'une pièce entre lesdites gorges parallèles (40), ladite nervure présentant une surface de sommet s'étendant vers la surface supérieure (23) de ladite tête composite.

5. Brosse à dents suivant l'une quelconque des revendications 1 à 4, dans laquelle ladite section en matériau élastomère (18) présente une forme générale en C suivant une section longitudinale.

6. Brosse à dents suivant la revendication 3, dans laquelle ladite section en matériau élastomère (18) est de forme générale en T suivant une section longitudinale, ladite section en matériau élastomère (18) s'étendant à partir de ladite surface supérieure (23) vers ladite surface inférieure (24, 26) dans une portion centrale de ladite section en matériau élastomère (18).

7. Brosse à dents suivant l'une quelconque des revendications 1 à 6, dans laquelle les deux sections (14, 16) sont reliées par un pont (30; 52) de faible épaisseur, ledit pont étant situé à distance de la surface supérieure des sections (14, 16).

8. Brosse à dents suivant la revendication 7, dans laquelle ledit pont (52) de faible épaisseur est entouré d'un matériau élastomère (50).

9. Procédé de fabricage d'une brosse à dents suivant l'une quelconque des revendications 1 à 8, dans lequel on moule la poignée (12) et la tête, les deux sections de tête (14, 16) étant alignées l'une par rapport à l'autre, puis on déplace angulairement les deux sections de tête (14, 16) l'une par rapport à l'autre, et on dispose ou on injecte ledit élastomère (18) entre elles.
